# EUROPEAN PATENT APPLICATION

(11) **EP 2 518 722 A2**
(43) Date of publication of application: **31.10.2012**
(21) Application number: 12163998.3
(22) Date of filing: 12.04.2012
(51) Int. Cl.: G10L 15/22, G10L 15/26

(54) **Method for providing link list and display apparatus applying the same**

(30) Priority: 28.04.2011 KR 20110040322; 15.03.2012 KR 20120026328
(71) Applicant: Samsung Electronics Co., Ltd., Suwon-si, Gyeonggi-do, 443-742 (KR)
(72) Inventor: Hwang, Byung-jin, Gyeonggi-do (KR); Ryu, Young-jun, Gyeonggi-do (KR); Lee, Hye-jeong, Seoul (KR)
(74) Representative: Hewett, Jonathan Michael Richard

(57) **Abstract**

A method of providing a list of links on a display apparatus and a display apparatus are provided. The method includes recognizing a voice spoken by a user, searching, among links included in a web page being currently displayed on the display apparatus, for a link including an index which coincides with the voice spoken by the user and generating a list of one or more links, each including the index which coincides with the voice spoken by the user.

## Description

The present invention relates to a method of providing a link list using voice recognition and a display apparatus applying the same, and more particularly, to a method of providing a link list, which provides a list including at least one link of links included in a web page, and a display apparatus applying the same.

Web browsing is becoming commonplace using a web browser even in a display apparatus such as a television (TV) or a mobile appliance as well as a personal computer (PC).

To select a link displayed on a web page in a TV in the related art, a method of selecting the link by moving a highlight type cursor upward, downward, leftward, and rightward using four direction keys or by pointing and selecting the link using a mouse-pointing type has been used.

However, since an input apparatus such as a touch panel or a mouse pointer is mostly not included in a TV and a method of touching and selecting a small-sized link in a mobile appliance having a small display screen such as a smart phone is used, there were many cases of selecting an undesired link by a user.

Therefore, there is a need for a method for more simply and accurately executing links included in a web page by users.

One or more exemplary embodiments of the present invention provide a method of providing a link list and a display apparatus applying the same, which search a link including an index which is coincided with a voice recognized through a voice recognition unit among links included in a web page being currently displayed and generate a list including the link including the index which is coincided with the recognized voice using a research result.

According to an aspect of the present invention, a method of providing a link list of a display apparatus includes recognizing a voice uttered by a user, searching a link including an index which is coincided with a recognized voice among links included in a web page being currently connected, and generating a list including the link including the index which is coincided with the recognized voice using a search result.

The method may further include, if a voice of a user is newly recognized, executing one of links included in the list in accordance with the newly recognized voice.

The method may further include if there is one link including an index which is coincided with the recognized voice as a result of the searching, executing the link including the index which is coincided with the recognized voice immediately, and the generating, if there are a plurality of links including an index which is coincided with the recognized voice, may include generating a list of links including the index which is coincided with the recognized voice.

The method may further include, if a voice of a user is newly recognized, changing the list so as to reflect the new recognition result.

The changing the list may include changing the list as a result of a new recognition so that a link including an index which is not coincided with a newly recognized voice is deleted from the link and only a link including an index which is coincided with the newly recognized voice is kept.

The changing the list may further include highlighting and displaying an index which is coincided with the recognized voice and a newly recognized voice among indexes of the links included in the list.

The generating the list may include displaying a list including links included in a specific area if the specific area is selected by an external input apparatus.

The generating the list may include displaying a list including links represented as an image within the web page if a preset word is included in the recognized voice.

The method may further include extracting indexes of the links included in the web page being displayed.

The recognizing the input voice of the user may include recognizing the voice of the user using an external voice recognition apparatus including a microphone.

The display apparatus may be any one selected from the group consisting of a computer, a television (TV), a smart phone, and a portable media player (PMP).

The method may further include, if there is no link which is coincided with the recognized voice, or a voice of a user is not recognizable, displaying a guidance message to inform that a voice is not recognizable.

The link list may include at least one of a previous item to go back to a previous search result and a cancel item to cancel a list.

According to an aspect of the present invention, a display apparatus, includes a communication unit which connects to a web page via a network, a display unit which displays a web page, a voice recognition unit which recognizes a voice uttered by a user, and a control unit which searches a link including an index which is coincided with a recognized voice among links included in a web page being currently connected through the communication unit and generates a list including the link including the index which is coincided with the recognized voice.

The control unit, if a voice of a user is newly recognized, may execute one of links included in the list in accordance with the newly recognized voice.

The control unit, if there is one link including an index which is coincided with the recognized voice as a result of the searching, may include executing the link including the index which is coincided with the recognized voice immediately, and if there are a plurality of links including an index which is coincided with the recognized voice, may include generating a list of links including the index which is coincided with the recognized voice.

The control unit, if a voice of a user is newly recognized, may change the list so as to reflect the new recognition result.

The control unit may change the list as a result of a new recognition so that a link including an index which is not coincided with a newly recognized voice is deleted from the list and only a link including an index which is coincided with the newly recognized voice is kept.

The control unit may highlight and display an index which is coincided with the recognized voice and a newly recognized voice among indexes of the links included in the list.

The control unit may control the display unit to display a list including links included in a specific area if the specific area is selected by an external input apparatus.

The control unit may control the display unit to display a list including links represented as an image within the web page if a preset word is included in the recognized voice.

The display apparatus may further include an index extraction unit which extracts indexes of the links included in the web page being displayed.

The voice recognition unit may recognize the input voice of the user using an external voice recognition apparatus including a microphone.

The display apparatus may be any one selected from the group consisting of a computer, a television (TV), a smart phone, and a portable media player (PMP).

The control unit, if there is no link which is coincided with the recognized voice, or a voice of a user is not recognizable, may display a guidance message to inform that a voice is not recognizable.

The link list may include at least one of a previous item to go back to a previous search result and a cancel item to cancel a list.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a block diagram schematically illustrating a display apparatus according to an exemplary embodiment;
FIG. 2 is a detailed block diagram illustrating a television (TV) according to an exemplary embodiment;
FIGS. 3A and 3B are views illustrating a method of providing a link list in the case where a link including an index which is coincided with a recognized voice is one according to an exemplary embodiment;
FIGS. 4A and 4B are views illustrating a method of changing a list by reflecting a new recognition result according to an exemplary embodiment;
FIGS. 5A and 5B are views illustrating a method of changing a list by reflecting a new recognition result according to another exemplary embodiment;
FIGS. 6A to 6C are views illustrating a method of executing a link using an external input apparatus and voice recognition according to an exemplary embodiment;
FIGS. 7A to 7C are views illustrating a method of selecting and executing a link represented as an image according to an exemplary embodiment;
FIG. 8 is a flowchart illustrating a method of providing a link list of a display apparatus briefly according to an exemplary embodiment;
FIG. 9 is a flowchart illustrating a method of providing a link list of a display apparatus in detail according to an exemplary embodiment; and
FIG. 10 is a view illustrating a method of executing a link using a dispersion voice recognition system according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

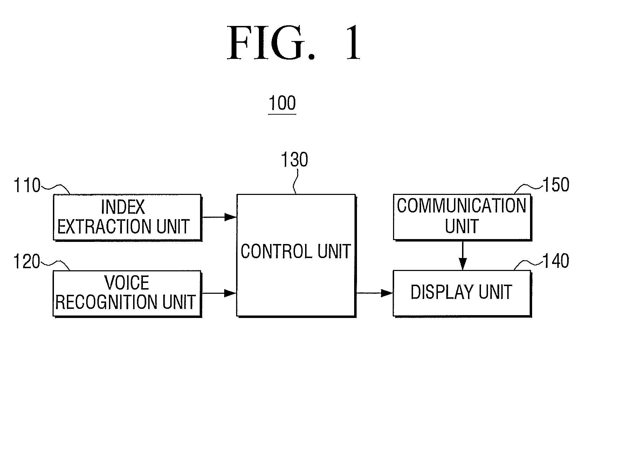

FIG. 1 is a schematic block diagram illustrating a display apparatus 100 according to an exemplary embodiment. As shown in FIG. 1, the display apparatus 100 includes an index extraction unit 110, a voice recognition unit 120, a control unit 130, a display unit 140, and a communication unit 150.

The index extraction unit 110 extracts indexes of links included in a web page being currently displayed through the display unit 140. As used herein, an "index" is at least one keyword corresponding to a link included in a script of a web page

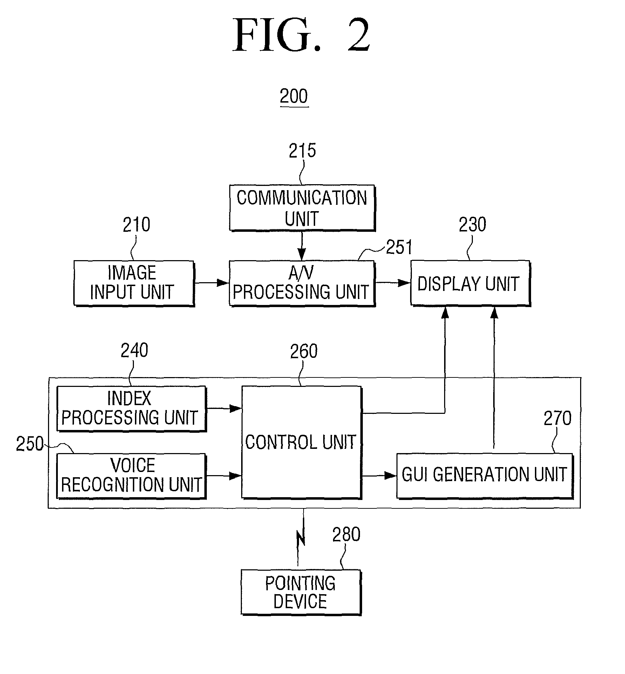

The voice recognition unit 120 recognizes a voice of a user. Specifically, the voice recognition unit 120 analyzes a waveform of a vocalization or speech uttered or spoken by the user input from a microphone embedded in a television (TV) (200 in FIG. 2) or an external microphone, distinguishes a word, phrase or a word sequence corresponding to the speech of the user, and outputs the distinguished word, phrase or word sequence as text information. The voice recognition unit 120 may be included in the display apparatus 100 or may be implemented by an external voice input apparatus.

The control unit 130 searches for a link including an index which coincides with the voice recognized through the voice recognition unit 120 among links included in the web page being currently connected through the communication unit 150 and executes the link including the index which coincides with the recognized voice using a result of the searching.

Specifically, the control unit 130 compares, sequentially, the indexes of the links extracted from the script of the web page to the voice recognized through the voice recognition unit 120 and searches for the link including the index which coincides with the recognized voice.

The control unit 130 determines whether or not the link including the index which coincides with the recognized voice is a single link. In other words, the control unit 103 determines whether only one link includes the index that coincides with the recognized voice or if more than one link includes the index. If the number of links including the index which coincides with the recognized voice is one, the control unit 130 immediately executes the link including the index which coincides with the recognized voice and displays the linked web page on the display unit 140.

If the number of links including the index which coincides with the recognized voice is a plurality of links, the control unit 130 generates and displays a list including the plurality of links including the index which coincides with the recognized voice. At this time, indexes and numbers corresponding to the plurality of links are also displayed in the list.

If further speech, or a newly spoken voice is newly recognized through the voice recognition unit 120, the control unit 130 executes one of the links included in the list in accordance with the newly recognized speech. Specifically, if a list is displayed on the display unit 140 and a link that a user wishes to select or a corresponding number is newly recognized through the voice recognition unit 120, the control unit 130 executes a link corresponding to the recognized speech from among links included in the list.

In addition, if further speech is newly recognized through the voice recognition unit 120, the control unit 130 changes the list to which a new recognition result is reflected. Specifically, the control unit 130 may change the list so that a link which does not coincide with the newly recognized speech among the list including the plurality of links is deleted and only those links which coincide with the newly recognized speech are kept. Further, the control unit 130 may highlight and display an index which coincides with the first recognized speech and the newly recognized speech among indexes of the links displayed in the list.

The display unit 140 displays a web page by the control of the control unit 130.

The communication unit 150 is connected to a web page including a plurality of links by being connected to an external network, and the connected web page is displayed on the display unit 140.

A user can select and execute a link of a web page with more convenience and accuracy through the above-described voice-recognizable display apparatus 100.

Hereinafter, a method of providing a link list of the TV 200 according to an exemplary embodiment will be described with reference to FIGS. 2 to FIG. 7C.

FIG. 2 is a detailed block diagram illustrating the TV 200 according to an exemplary embodiment. As shown in FIG. 2, the TV 200 includes a communication unit 205, a video input unit 210, an audio/video (A/V) processing unit 220, a display unit 230, an index extraction unit 240, a voice recognition unit 250, a control unit 260, a graphic user interface (GUI) generation unit 270, and a pointing device 280. Meanwhile, the index extraction unit 240, the voice recognition unit 250, the control unit 260, and the GUI generation unit 270, according to an exemplary embodiment, may be realized as at least one CPU, processor, etc.

The video input unit 210 (also called image input unit) includes a plurality of input terminals and receives inputs of a component video signal, a super-video home system (S-VHS) video signal, a composite video signal, and the like from an external apparatus such as a video player or a digital versatile disc (DVD) player and an external network through the input terminals, and inputs an audio signal corresponding to each of the video signals.

A communication unit 215 is connected to a web page including a plurality of links by being connected to an external network. At this time, the communication unit 215 may be connected to an external apparatus (for example, a server) via a network under the control of the control unit 260. The communication unit 215 may be realized as at least one of Ethernet, wireless LAN, and Bluetooth.

The A /V processing unit 220 performs signal processing for a video signal and an audio signal received from the video input unit 210 and a communication unit 215 such as video decoding, video scaling, or audio scaling. The A/V processing unit 220 outputs a video signal to the display unit 230.

The display unit 230 displays the video signal output from the A/V processing unit 220. Further, the display unit 230 may display a web page loaded through the communication unit 215. The display unit 230 may display the video by adding a GUI generated by the GUI generation unit 270.

The index extraction unit 240 extracts indexes of links included in a web page being displayed on the display unit 230. Specifically, the index extraction unit 240 performs parsing for text information of the links included in a script of the web page and extracts the indexes. The extracted index may be a meaningful keyword among the text information included in the links. Further, the extracted index may be stored in a storage unit (not shown).

The voice recognition unit 250 recognizes a voice of a user and outputs the recognized voice as text information. Specifically, the voice recognition unit 250 analyzes a waveform of feature of speech uttered or spoken by the user (that is, a feature vector of the voice) input through a microphone embedded in the TV 200 or a microphone wired/wireless connected to the TV 200, distinguishes a word, phrase or a word sequence corresponding to the speech of the user, and outputs the distinguished word as text information.

Although the above-described embodiment illustrates a configuration in which the voice recognition unit 250 is embedded in the TV 200 or connected to the TV 200, this is only one embodiment and the voice uttered by the user may be recognized by other voice recognition apparatuses.

For example, the voice recognition unit 250 may be implemented by an external voice input apparatus such as a smart phone including a microphone, a tablet personal computer (PC), or a remote controller. Specifically, the voice recognition unit 250 may recognize a voice of a user through an external voice input apparatus, convert a recognized voice into text information, and transmit the converted text information to the TV 200. The external voice input apparatus and the TV 200 may transmit and receive the text information using wireless fidelity (Wi-Fi) or Bluetooth.

The GUI generation unit 270 generates a GUI for being provided to a user. The GUI generation unit 270 may generate a GUI of a user menu provided as an on screen display (OSD) type.

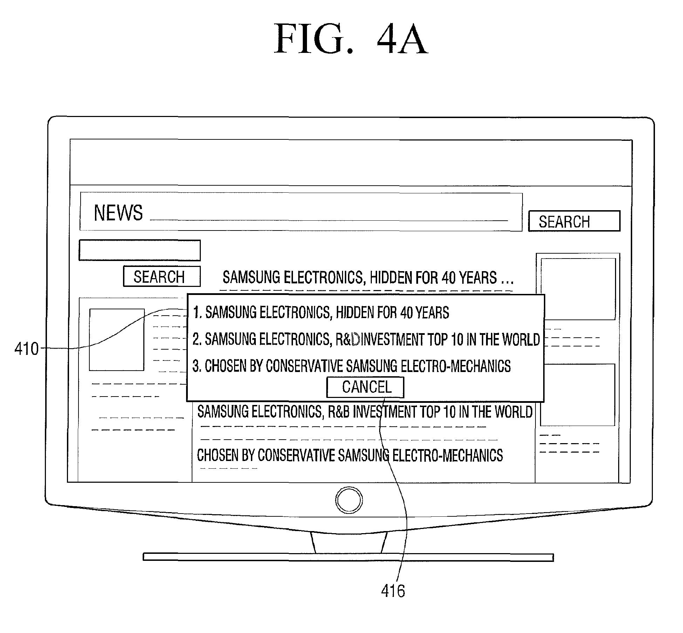

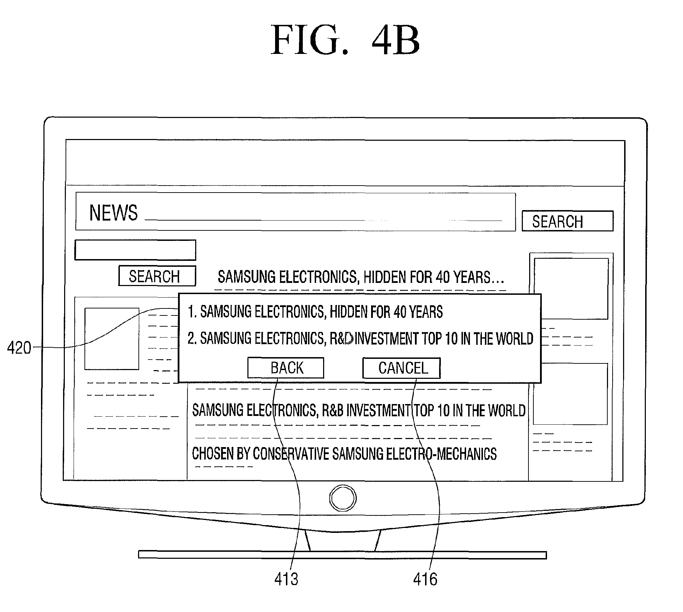

If the link including the index which coincides with the voice recognized by the voice recognition unit 250 is a plurality of links, the GUI generation unit 270 generates a list including the plurality of links including the index which coincides with the recognized voice as an on screen display (OSD) type. Specifically, if a plurality of links are found which each include the index which coincides with the recognized voice, the GUI generation unit 270 extracts the index of the found links and numbers the extracted index to generate a list 410 as an on screen display (OSD) type as shown in FIG. 4A or FIG. 4B. As shown in FIG. 4B, the list 410 may include a previous item 413 to go back to a previous search result and a cancel item 416 to cancel the list. If the voice of "previous" or "cancel" is recognized through the voice recognition unit 250 or is selected using the pointing device 280, the previous item 413 or the cancel item 416 may be executed. Accordingly, if undesired links are found because a user voice is not recognized properly (for example, an unintended user voice is recognized), the search results may be cancelled using the previous item 413 or the cancel item 416.

Further, if a specific area is selected by the pointing device 280, the GUI generation unit 270 generates a list including links included in the specific area as an on screen display (OSD) type. If a specific language is recognized to select a link represented as an image, the GUI generation unit 270 generates a list including the links represented as an image as an on screen display (OSD) type.

Further, if new speech is newly recognized through the voice recognition unit 250, the GUI generation unit 270 may change the list by reflecting a new recognition result, which will be explained in detail with reference to FIG. 4A to FIG. 5B.

The pointing device 280 is an external input apparatus and receives a user input and transmits the user input to the control unit 260. In particular, the pointing device 280 receives a link select command and the like and transfers the received link select command to the control unit 260. For example, the pointing device 280 may be a relative mapping type pointing device such as a remote controller, a mouse, a key pad, or a touch pad or a direct pointing device of a direct mapping type.

The control unit 260 thereby controls an overall function of the TV 200 according to the user's manipulation.

In particular, the control unit 260 searches for a link including an index which coincides with the voice recognized through the voice recognition unit 250 among links included in a web page being currently connected and provides a list including those links which include the index which coincides with the recognized voice using a searching result. The control unit 260 executes one of the plurality of links included in the list according to input of a user. At this time, the web page being currently connected includes not only the web page being currently displayed on the display unit 230 but also web pages which can be displayed as a screen is moved by such operations as scrolling.

Specifically, the control unit 260 searches for a link including the index which coincides with the recognized voice by comparing the voice recognized through the voice recognition unit 250 with the indexes of the links extracted from the index extraction unit 240.

The control unit 260 determines whether or not the link including the index which coincides with the recognized voice is a single link or a plurality of links. If the number of links including the index which coincides with the recognized voice is one, the control unit 260 immediately executes the link including the index which coincides with the recognized voice and displays a linked web page on the display unit 230.

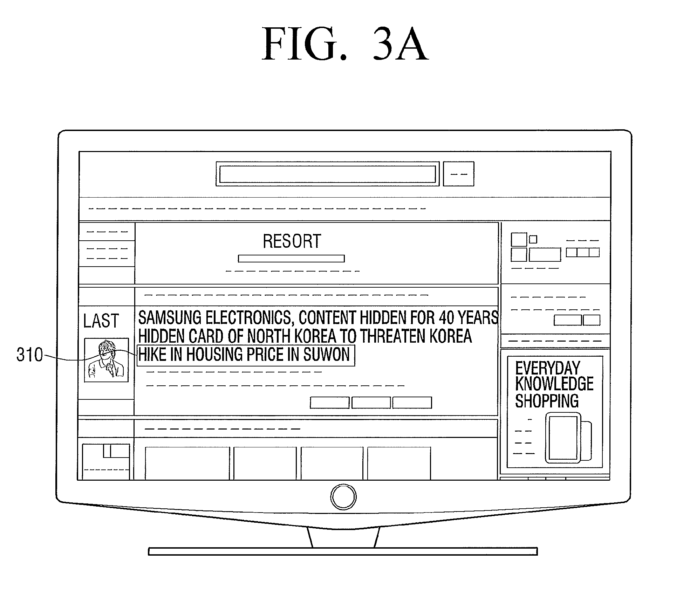

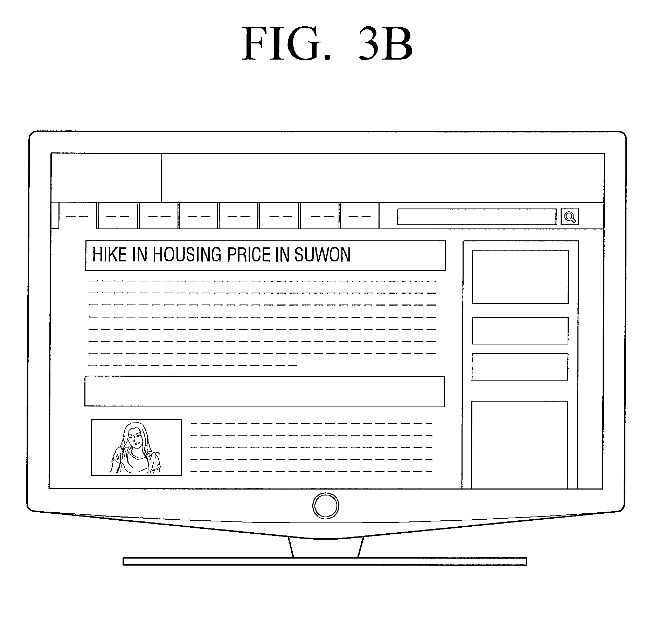

For example, when a user utters "Suwon" when a web page such as the one illustrated in FIG. 3A is connected, the voice recognition unit 250 distinguishes the voice uttered by the user and outputs text information called "Suwon". The control unit 260 searches whether or not a word "Suwon" uttered by the user coincides with an index of a link included a web page. As a searching result, when the link including the index "Suwon " is only one ("Hike in housing prices in Suwon area "), the control unit 260 immediately executes the link 310 "Hike in housing prices in Suwon area " and displays a linked webpage screen as shown in FIG. 3B.

However, when the number of links including the index which coincides with the recognized voice is a plurality, the control unit 260 generates a list including the plurality of links including the index which coincides with the recognized voice and displays the list. Specifically, the control unit 130 compares, sequentially, the indexes of the links extracted from the script of the web page being currently connected to the voice recognized through the voice recognition unit 120 and searches the link including the index which coincides with the recognized voice. The control unit 130 numbers the index of the searched link and generates and displays a list on the display unit 230 as an on screen display (OSD) type.

For example, if a user utters "Samsung", the voice recognition unit 250 distinguishes a voice uttered by the user and outputs text information called "Samsung". The control unit 260 determines whether or not a word "Samsung" uttered by the user coincides with an index of a link included in the web page.

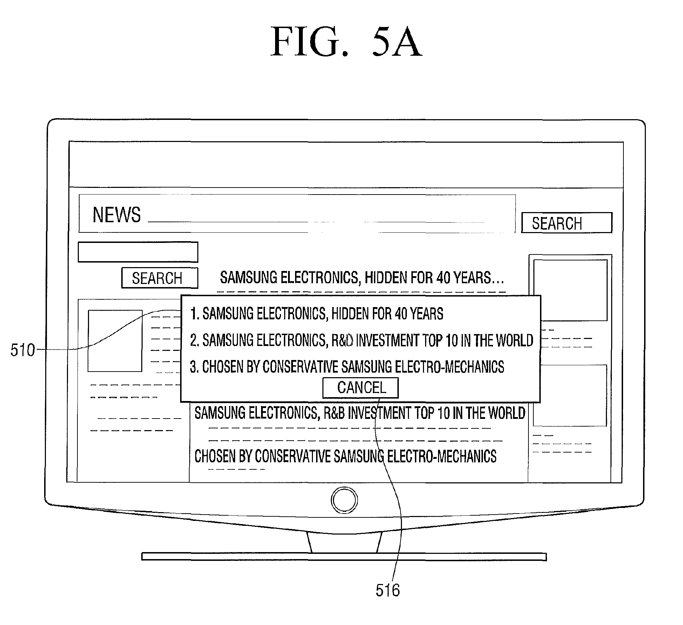

As a searching result, if there are three links including the index called "Samsung" ("Samsung Electronics, hidden for 40 years...", "Samsung Electronics, R&D investment top 10 in the world", and "... chosen by conservative Samsung Electro-mechanics"), the control unit 260 generates a list including the three links as shown in FIGS. 4A and 5A.

If further speech containing a new word, phrase or word sequence is newly recognized through the voice recognition unit 250, the control unit executes one of the links included in the list in accordance with the newly recognized word, word sequence or phrase. If an index of a link or its corresponding number is newly recognized through the voice recognition unit 250, the control unit 260 executes the link corresponding to the newly recognized word, word sequence or phrase. For example, if "work" or "Samsung Electronics, hidden for 40 years" is recognized in the user's speech, the control unit 260 may execute "Samsung Electronics, hidden for 40 years" which is a link corresponding to the recognized voice.

In order to execute one of the links included in the list, an external apparatus such as the pointing device 280 may be used.

If new speech is recognized through the voice recognition unit 250, the control unit 260 may change the list to reflect a new recognition result.

Specifically, the control unit 260 may change the list so that those links which do not coincide with newly recognized speech are deleted from the list and those links which coincide with the newly recognized speech are kept. For example, in the state that the list is displayed as shown in FIG. 4A, if the user utters "Electronics", the voice recognition unit 250 distinguishes "electronics" uttered by the user and outputs text information called "Electronics". The control unit 260 determines whether or not a word "Electronics" newly uttered by the user coincides with the index of the links included in the list.

As a new recognition result, if, of the links included in the list, two links include the index "electronic" ("Samsung Electronics, hidden for 40 years ..." and "Samsung Electronics, R&D investment top 10 in the world ...), the control unit 260 change the list so that the one link ("... chosen by conservative Samsung Electro-mechanics") which does not include the index "electronics" is deleted from the list and only the two links including the index "Electronics" are kept, as shown in FIG. 4B.

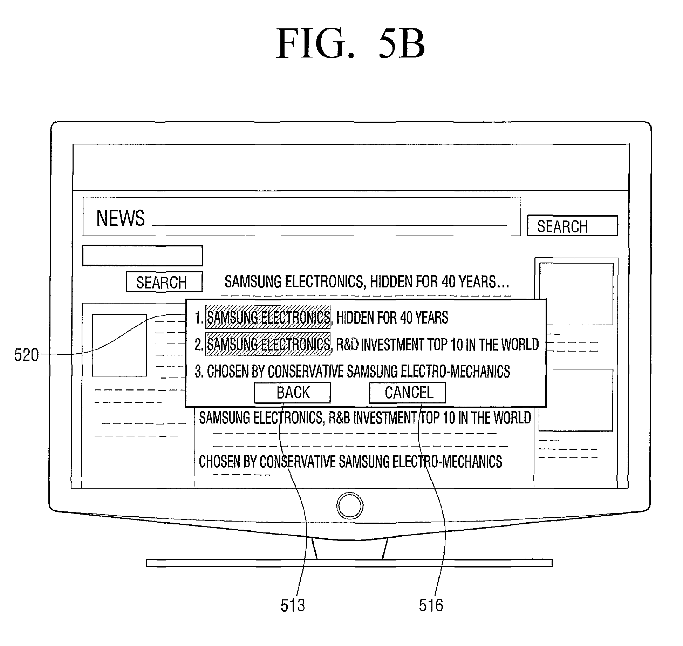

As another embodiment, the control unit 260 may change the list so that only those indexes which coincide with both the original speech of the user and the newly recognized speech are highlighted among indexes of the links displayed in the list. For example, in the state that the list displayed as shown in FIG. 5B, the user utters "Electronics", the control unit 260 recognizes a word "Electronics" and searches indexes of links included in the list.

As a new searching result, if there is a link including the index "Electronics" among the links included in the list, the control unit 260 highlights and displays "Samsung" previously recognized and "Electronics" newly recognized among the links represented in the list, as shown in FIG. 5B.

Further, the control unit 260 may rearrange an order of links represented in the list by the new searching result. For example, if there are three links represented in the list, when the newly recognized speech is coincided with a link secondly displayed, the control unit 260 may change the list so that the link secondly displayed is first displayed.

Hereafter, the control unit 260 may execute one link by selecting the link of the links represented in the list according to a user input. As the user input, the user may utter a link number represented in the list or may continuously input a voice command to search one link. In another embodiment, an external input apparatus may be used.

For example, in the state that a list is displayed as shown in FIG. 4B, if the user utters "2", the voice recognition unit 250 outputs text information called "2" again. Hereafter, the control unit 260 searches a link in which the number is "2" among the plurality of links included in the list 410 and immediately executes the link "Samsung Electronics, R&D investment top 10 in the world" which is the link including the index "2" among the links included in the list 410.

As another example, in the state that the list is displayed as shown in FIG. 4B, if the user utters "investment", the voice recognition unit 250 outputs text information called "investment". Hereafter, the control unit 260 searches for a link including an index "investment" among the plurality of links included in the list. If, among the links displayed in the list, one link including the index "investment", the control unit 260 immediately executes the link "Samsung Electronics, R&D investment top 10 in the world" which is the link including the index "investment".

As still another example, in the state that the list is displayed as shown in FIG. 4B, the control unit 260 may execute one of the links represented in the list by an input of the pointing device 280 such as a touch pad or a mouse.

Further, when a specific area is selected by the pointing device 280, the control unit 260 controls the display unit 230 to display a list including links included in the specific area from among links included in a web page being currently connected. The control unit 260 selects one of links in the list according to the voice recognized through the voice recognition unit 250 and executes the link.

For example, when a pointer of the pointing device 280 is located at a specific point, the control unit 260 selects a specific area 610 which is an area within a preset distance from the specific point at which the pointer of the pointing device 280.

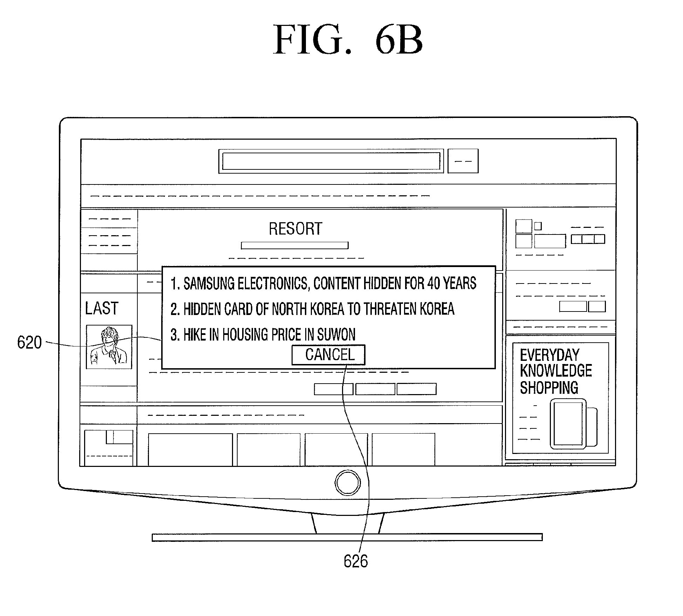

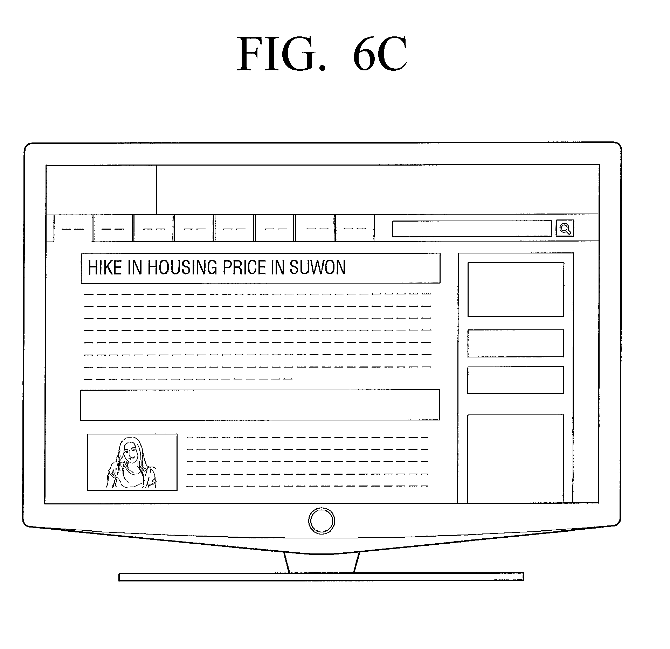

As shown in FIG. 6B, the control unit 260 generates a list 620 including the links included in the specific area 610 at which the pointer 605 is located. When a user utters "Suwon", the control unit 260 selects and executes a link "Hike in housing prices in Suwon area" including the "Suwon" among the links included in the list 620 of FIG. 6B. Therefore, as shown in FIG. 6C, the control unit 260 controls the display unit 230 to display a web page in which the link "Hike in housing prices in Suwon area" is linked.

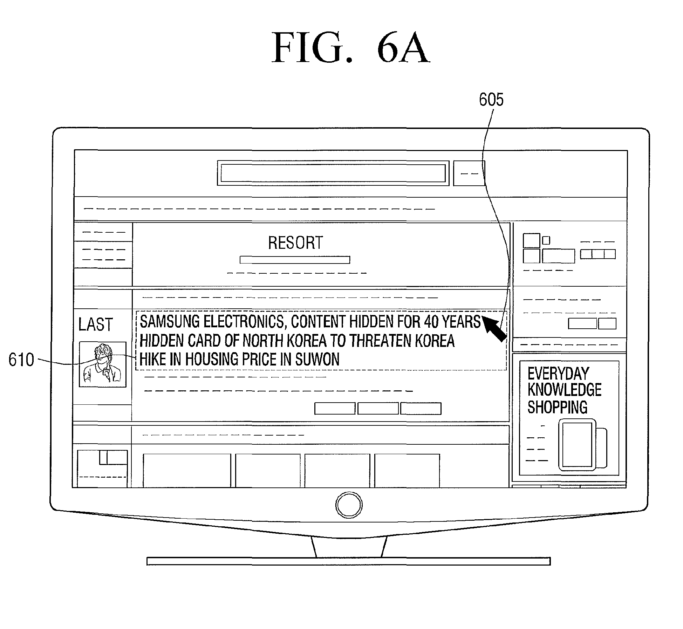

By the embodiments as shown in FIG. 6A to 6C, the link can be selected with more accuracy even in an apparatus in which it is impossible to normally touch a desired touch point since a display screen is small, such as with a smart phone.

Further, to select links represented as an image, when a preset word is included in a recognized voice, the control unit 260 control the display unit 230 to display the links represented as an image within a web page being currently connected and executes one of the links included in the list according to the voice recognized through the voice recognition unit 250.

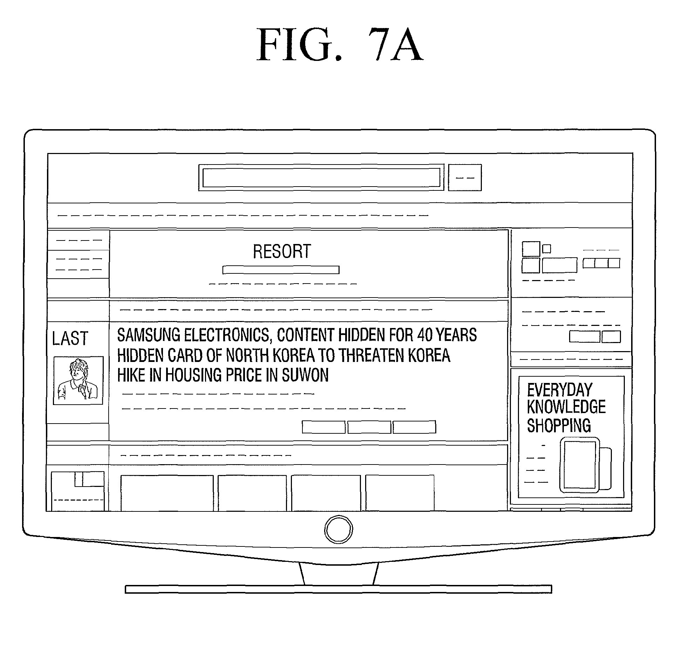

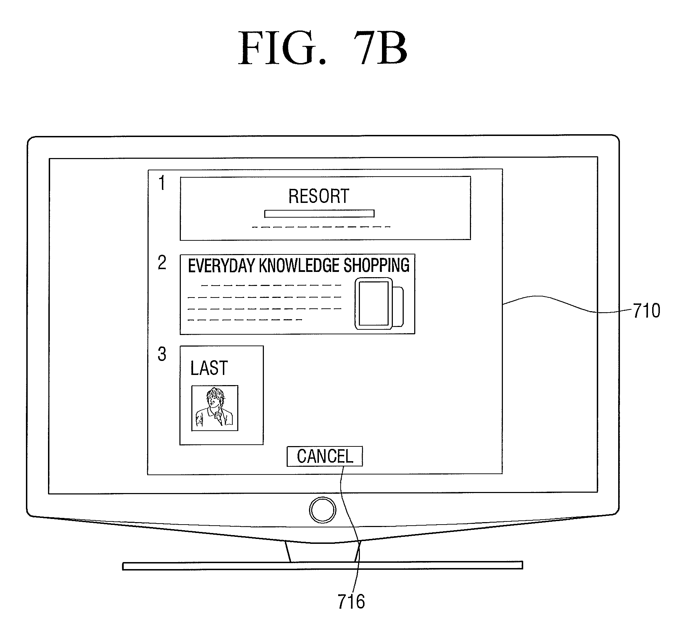

For example, while a web page is being connected as shown in FIG. 7A, if a user utters "image", the control unit 260 searches for links which are represented as images in the web page. As a searching result, there are three links represented as images ("RESORT", "LAST", and "EVERYDAY KNOWLEDGE SHOPPING"), the control unit 260 generates a list including the three links as shown in FIG. 7B. The links in the generated list 710 may be represented as images as in the web page. However, this is only one embodiment and the list may be generated in another representation type such as a uniform resource locator (URL).

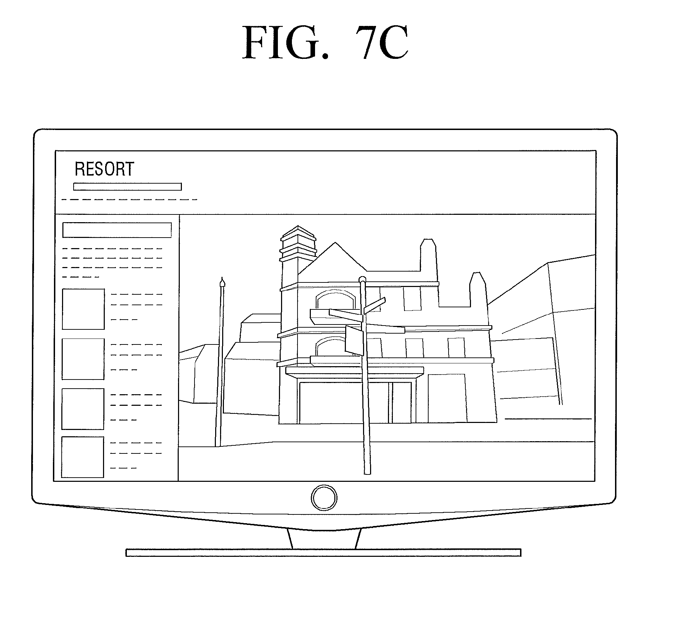

On the other hand, in the state that the list 710 is displayed, if the user utters "1", the control unit 260 searches for a link including an index "1" and executes the link ("RESORT") including the index "1". Therefore, as shown in FIG. 7C, the control unit 260 controls the display unit 230 to display a web page linked with "RESORT".

Meanwhile, if there is no link which coincides with a user voice recognized through the voice recognition unit 250 or it is difficult to recognize a user voice (for example, if a user voice is too quiet or not clear), the control unit 260 may display a guidance message to inform that the voice is not recognizable. At this time, the guidance message may include information regarding voice recognition failure and a message requesting re-recognition of the voice.

As described above, the link list is provided through a voice of a user and the link is executed so that the link can be executed with more accuracy and convenience.

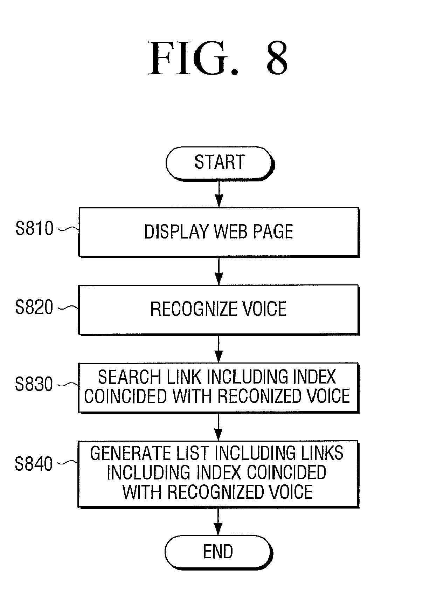

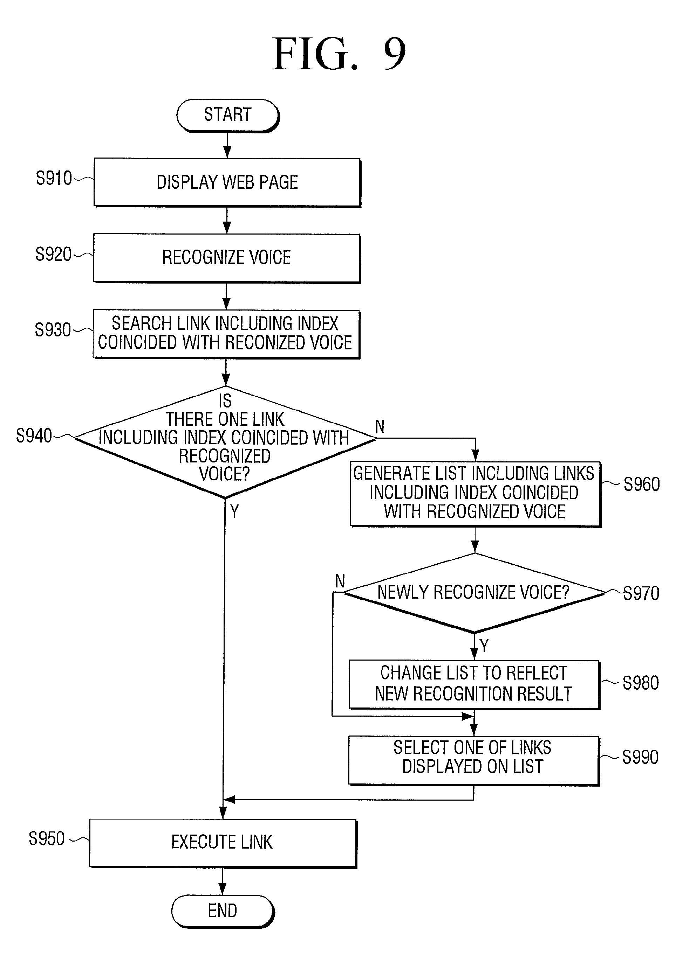

Hereinafter, a method of providing a link list of the display apparatus 100 will be described with reference to FIG. 8 and FIG. 9. FIG. 8 is a flowchart illustrating a method of providing a link list briefly according to an exemplary embodiment.

First, the display apparatus 100 displays a web page being currently connected (S810). At this time, the web page being currently connected includes not only the web page being currently displayed on the display unit 230 but also web pages which can be displayed as a screen moves by such operations as scrolling. In addition, the displayed web page being currently connected includes at least one link.

The display apparatus 100 recognizes a voice of a user (S820). Specifically, the display apparatus 100 performs parsing for a waveform of speech uttered or spoken by the user, distinguishes a word, phrase or a word sequence corresponding to the speech of the user, and outputs the distinguished word or word sequence as text information. The display apparatus 100 searches for a link including an index which coincides with a recognized voice (S830). Specifically, the display apparatus 100 searches for the link including the index which coincides with the recognized voice by comparing the recognized voice with an index extracted from a hyper link included in a displayed screen.

In addition, the display apparatus 100 generates a list including a plurality of links including the index which coincides with the recognized voice (S84o). Specifically, if the link including the index which coincides with the recognized voice is a plurality of links, the display apparatus 100 generates and displays a list of the indexes of the plurality of links and their corresponding numbers as an on screen display (OSD) type.

As described above, the list of a plurality of links corresponding to a recognized user voice is generated so that the user can execute a link with more convenience and accuracy.

FIG. 9 is a flowchart illustrating a method of providing a link in detail according to an exemplary embodiment.

The display apparatus 100 displays a web page being currently connected (S910). The web page includes at least one link.

The display apparatus 100 recognizes a voice of a user (S920). Specifically, the display apparatus 100 performs parsing a wave form of speech uttered or spoken by the user, identifies a word, phrase or word sequence corresponding to the speech of the user, and outputs the identified word, phrase or word sequence as text information.

The display apparatus 100 searches for a link including an index which coincides with the recognized voice (S930). Specifically, the display apparatus 100 compares the recognized voice with an index extracted from a hyperlink in a screen being displayed in order to search for a link including an index which coincides with the recognized voice.

The display apparatus 100 determines whether there is one link including an index which coincides with the recognized voice (S940).

If there is one link including an index which coincides with the recognized index (S940-Y), the display apparatus 100 executes, immediately, the link including the index which coincides with the recognized index (S950).

If there are a plurality of links including an index which coincides with the recognized voice (S940-N), the display apparatus 100 generates a list of the plurality of links including the index which coincides with the recognized voice (S960). Specifically, if there are a plurality of links including the index which coincides with the recognized voice, the display apparatus 100 generates and displays a list of indexes of the plurality of links and their corresponding numbers as on a screen display (OSD) type.

The display apparatus 100 determines whether there is new speech uttered or spoken by the user, and if so, newly recognizes the speech of the user (S970). If there is no new speech uttered by the user and thus, no speech is newly recognized (S970-N), the display apparatus 100 selects one of the links being currently displayed in a list in accordance with a user input (S990) and executes the selected link (S950).

However, if there is newly recognized speech of the user (S970-Y), the display apparatus 100 changes the list to reflect a new recognition result (S980). Specifically, the display apparatus 100 may change the list as a result of a new recognition so that a link which does not coincide with the newly recognized speech is deleted in the list including a plurality of links and only those links which coincide with the newly recognized speech are kept. In addition, the display apparatus 100 may highlight and display an index which coincides with the initially recognized speech and the newly recognized speech among indexes of the links included in the list. The display apparatus 100 selects one of links displayed in the list in accordance with a user input (S990). If one link is selected, the display apparatus 100 executes the selected link (S950).

As described above, a link is executed using a user voice and thus, the user may execute the link more accurately and conveniently.

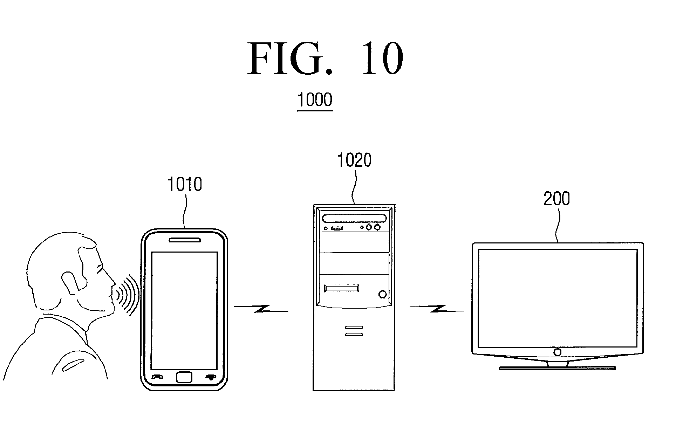

Hereinafter, a method of providing a link list using a dispersion voice recognition system according to another exemplary embodiment will be described with reference to FIG. 10.

FIG. 10 is a view illustrating a method of performing a link using a dispersion voice recognition system according to another exemplary embodiment. As shown in FIG. 10, the dispersion voice recognition system 1000 may include a mobile device 1010, a server 1020, and a TV 200.

Specifically, the mobile device 1010 is a voice recognition apparatus such as a smart phone including a microphone, a tablet PC, or a remote controller, which extracts voice information of speech uttered or spoken by a user (for example, a feature vector) and transmits the voice information to an external server 1020.

The server 1020 receives the voice information uttered by the user, recognizes the voice of the user through the received voice information, converts the recognized voice into text information, and transmits the text information to the TV 200.

The TV 200 searches and executes a link by receiving the text information through the server 1020 and comparing the text information with the indexes extracted by the index extraction 240. Specifically, the TV 200 searches for a link including an index which coincides with the voice of the user among the links included in a web page being currently displayed by comparing the text information received from the server 920 with the indexes of the links included in the web page being currently displayed, which are extracted from the index extraction unit 240 and executes a found link. A method of searching and executing the link is as described above and thus its detailed description will be omitted.

Although the above-described dispersion voice recognition system 1000 extracts a feature vector of the voice uttered by the user using the mobile device 1010, this is only one embodiment and the TV 200 may directly extract the feature vector of the voice of uttered by the user and transmit the extracted feature vector to the server 1020 .

Although the exemplary embodiment illustrates that the dispersion voice recognition system 900 searches and executes the link by comparing the text information obtained by recognizing the voice of the user with the indexes extracted by the index extraction unit 240 through the TV 200, this is only one embodiment and the dispersion voice recognition system may search and execute the link by comparing the text information obtained by recognizing the voice of the user with the indexes of the link through another external server.

Further, any voice recognition method which is capable of recognizing a voice of the user, other than the voice recognition method described in the exemplary embodiment, may be applied to the present invention.

The web page described in the exemplary embodiment is only illustrative and can be substituted with other kinds of linkable pages (for example, word text). Further, as the display apparatus 100 described in the exemplary embodiment, any display apparatus which can search an Internet web page may be used. For example, the display apparatus 100 may be a computer, a TV, a PMP, a smart phone, or the like.

The foregoing exemplary embodiments and advantages are merely exemplary and are not to be construed as limiting the present invention. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of providing a list of links on a display apparatus, the method comprising:
recognizing a voice spoken by a user;
searching, among links included in a web page being currently displayed on the display apparatus, for a link including an index which coincides with the voice spoken by the user; and
generating a list of one or more links, each including the index which coincides with the voice spoken by the user; and
if a voice of the user is recognized as newly spoken, updating the list to reflect the newly spoken voice.

2. The method as claimed in claim 1, wherein the updating the list comprises deleting from the list one or more links, each of which does not include an index which coincides with the newly spoken voice.

3. The method as claimed in claim 1 or 2, wherein the updating the list further includes highlighting one or more links, each of which includes an index which coincides with the newly spoken voice.

4. The method as claimed in any one of claims 1 to 3, further comprising:
recognizing a voice which selects one link of the list; and
executing the one link according to the recognized voice.

5. The method as claimed in any one of claims 1 to 4, wherein if a specific area is selected by an external input apparatus, the generating the list comprises displaying a list including only links which are included in the specific area.

6. The method as claimed in any one of claims 1 to 4, wherein if a preset word is included in the voice spoken by the user, the generating the list comprises displaying the list including only links represented as an image within the web page being currently displayed.

7. The method as claimed in any one of claims 1 to 6, further comprising extracting indexes of the links included in the web page being displayed.

8. The method as claimed in any one of claims 1 to 7, wherein the recognizing the voice spoken by the user includes recognizing the voice spoken by the user using an external voice recognition apparatus including a microphone.

9. The method as claimed in any one of claims 1 to 8, wherein the display apparatus is one selected from the group consisting of a computer, a television, a smart phone, and a portable media player.

10. A display apparatus, comprising:
a display unit for displaying a web page;
a voice recognition unit for recognizing a voice spoken by a user; and
a control unit arranged to search, among links included in a web page being currently displayed on the display unit, for a link including an index which coincides with the voice spoken by the user, generate a list of one or more links, each including the index which coincides with the voice spoken by the user, and if a voice of the user is recognized as newly spoken, updating the list to reflect the newly-spoken voice.

11. The display apparatus as claimed in claim 10, wherein the control unit is arranged to update the list to delete from the list one or more links, each of which does not include an index which coincides with the newly-spoken voice.

12. The display apparatus as claimed in claim 10 or 11, wherein the control unit is arranged to update the list to highlight one or more links, each of which includes an index which coincides with the newly-spoken voice.

13. The display apparatus as claimed in any one of claims 10 to 12, wherein the voice recognition unit is arranged to recognize a voice which selects one link of the list and the control unit executes the one link according to the recognized voice.

14. The display apparatus as claimed in any one of claims 10 to 13, wherein the control unit is arranged to control the display unit to display a list including links included in a specific area if the specific area is selected by an external input apparatus.

15. The display apparatus as claimed in any one of claims 10 to 13, wherein the control unit is arranged to control the display unit to display a list including links represented as an image within the web page if a preset word is included in the voice spoken by the user.
